# EUROPÄISCHE PATENTANMELDUNG

(11) **EP 0 830 984 A2**
(43) Veröffentlichungstag der Anmeldung: **25.03.1998**
(21) Anmeldenummer: 97115322.6
(22) Anmeldetag: 04.09.1997
(51) Int. Cl.: B60Q 1/26

(54) **Leuchte für Fahrzeuge**

(30) Priorität: 19.09.1996 DE 19638081
(71) Anmelder: Hella KG Hueck & Co., 59552 Lippstadt (DE)
(72) Erfinder: Decker, Detlef, 59558 Lippstadt (DE); Jost, Franz-Gerhard, 59821 Arnsberg (DE)

(57) **Zusammenfassung**

Die Leuchte für Fahrzeuge weist eine Leuchtenkammer auf, welche durch eine lichtdurchlässige Lichtscheibe abgedeckt ist. In die Leuchtenkammer sind mehrere nebeneinander angeordnete optische Lichtsysteme eingesetzt. Die Lichtsysteme weisen eine als Lichtquelle dienende Leuchtdiode und eine der Leuchtdiode nachgeschaltete Zwischenscheibe auf, welche mit das Licht bündelnden optischen Elementen besetzt ist. Die Lichtsysteme verlaufen mit ihren optischen Achsen und die Lichtscheibe in ihrer Hauptausdehnung quer zur Lichtaustrittsrichtung der Leuchte. In die gebündelten Lichtstrahlen der Lichtsysteme ist ein Umlenkspiegel eingesetzt, welcher zu den optischen Achsen der Lichtsysteme in einem spitzen Winkel verläuft, welcher kleiner als 45° ist. Der Umlenkspiegel ist partiell mit Umlenkflächen versehen, auf welche die gebündelten Lichtstrahlen der Lichtsysteme auftreffen.

## Beschreibung

Die Erfindung betrifft eine Leuchte für Fahrzeuge mit mindestens einer Leuchtenkammer für eine Signalfunktion, mit einer die Leuchtenkammer abdeckenden lichtdurchlässigen Lichtscheibe, mit mindestens einem optischen Lichtsystem, welches eine Lichtquelle und eine der Lichtquelle nachgeschaltete Zwischenscheibe aufweist, die mit das Licht bündelnden optischen Elementen besetzt ist, wobei die lichtdurchlässige Lichtscheibe mit ihrer Hauptausdehnung und die optische Achse des optischen Lichtsystems quer zur Lichtaustrittsrichtung der Leuchte verläuft und mit einem das gebündelte Licht reflektierenden Umlenkspiegel, welcher in einem spitzen Winkel zur optischen Achse des Lichtsystems verläuft und das Licht in Richtung der Lichtscheibe reflektiert.

Eine Leuchte für Fahrzeuge dieser Art ist aus der DE 30 05 883 A1 bekannt. Die Leuchte ist seitlich neben einem Scheinwerfer für Fahrzeuge in eine Karosserieöffnung eingesetzt und weist eine Signalfunktion für Blinklicht auf. Eine äußere Lichtscheibe der Leuchte verläuft mit ihrer Außenseite bündig zur angrenzenden Außenseite des Fahrzeugs. Die Lichtscheibe der Leuchte ist außen gewölbt und verläuft ebenso wie eine optische Achse eines optischen Lichtsystems der Leuchte quer zur Lichtaustrittsrichtung der Leuchte. Das Lichtsystem der Leuchte ist in Lichtaustrittsrichtung gesehen seitlich neben der lichttechnisch wirksamen Signalfläche der Lichtscheibe angeordnet und weist ein Gehäuse für einen schaltenförmigen Reflektor, eine im Brennort des Reflektors angeordnete Lichtquelle und eine der Lichtquelle nachgeschaltete Zwischenscheibe auf. Die Zwischenscheibe weist im zentralen Bereich an der Innenseite optische Elemente auf, welche das direkt von der Lichtquelle ausgehende Licht bündeln. Die optischen Elemente der Zwischenscheibe sind von Fresnellinsen gebildet, durch welche die gebündelten Lichtstrahlen parallel zueinander verlaufen. Durch den äußeren umlaufenden breiten Randbereich der Lichtscheibe gehen die durch den schalenförmigen Reflektor reflektierten und parallel gerichteten Lichtstrahlen hindurch. Ein solches Lichtsystem weist zwar eine hohe Beleuchtungsstärke auf, jedoch baut es in Richtung der Lichtaustrittsrichtung der Leuchte entsprechend groß.

Die gebündelten Lichtstrahlen des optischen Lichtsystems treffen auf eine plattenartigen Umlenkspiegel auf, welcher in einem spitzen Winkel von ca. 45° zur optischen Achse des optischen Lichtsystems verläuft. An der Spiegelfläche des Umlenkspiegels reflektieren die gebündelten Lichtstrahlen des optischen Lichtsystems zur äußeren Lichtscheibe der Leuchte hin. In Lichtaustrittsrichtung gesehen ist die Signalfläche der Lichtscheibe nicht größer als die Lichtaustrittsfläche des Lichtsystems im Bereich seiner Zwischenscheibe. Je größer die Signalfläche der Lichtscheibe sein soll um so größer ist die Lichtaustrittsfläche des Lichtsystems und somit die Bautiefe in Lichtaustrittsrichtung der Leuchte.

Aufgabe der Erfindung ist es, die im Oberbegriffs des Anspruchs 1beschriebene Leuchte für Fahrzeuge derart zu gestalten, daß die Leuchte bei einer kleinen Bautiefe eine Lichtscheibe mit einer großen Signalfläche aufweist. Diese Aufgabe wird nach der Erfindung dadurch gelöst, daß
- in der für eine Signalfunktion dienenden Leuchtenkammer mehrere optische Lichtsysteme nebeneinander angeordnet sind, deren optische Achsen in einer quer zur Lichtaustrittsrichtung der Leuchte verlaufenden Fläche liegen;
- der spitze Winkel zwischen dem Umlenkspiegel und den optischen Achsen der Lichtsysteme kleiner als 45° ist;
- der Umlenkspiegel partiell mit Umlenkflächen versehen ist, auf welche die gebündelten Lichtstrahlen der Lichtsysteme auftreffen.

Wegen der Verwendung von mehreren nebeneinander angeordneten optischen Lichtsystemen und weil bei jedem optischen System eine Leuchtdiode als Lichtquelle dient, können die optischen Lichtsysteme in Lichtaustrittsrichtung klein bauen. Die Leuchtdioden sollten einen aus divergierend zueinander verlaufenden Lichtstrahlen bestehenden Lichtkegel aufweisen, welcher die Zwischenscheibe annähernd bis zu ihrem Rand ausleuchtet. Die Zwischenscheibe sollte etwa bis zum Rand mit den die Lichtstrahlen bündelnden optischen Elementen besetzt sein. Die Zwischenscheibe kann sehr flach bauen, wenn die das Licht bündelnden optischen Elemente von fresnellinsenartigen Segmenten gebildet sind. Durch fresnellinsenartige Segmente kann das gebündelte Licht parallel zueinander verlaufen. Je kleiner der spitze Winkel zwischen dem Umlenkspiegel und den optischen Achsen der Lichtsysteme ist, um so länger ist die Signalfläche der lichtdurchlässigen Lichtscheibe. Der Umlenkspiegel kann in seiner Hauptausdehnung eben oder gewölbt ausgeführt sein. Bei einer besonders vorteilhaften Ausführung der Leuchte beträgt der Winkel zwischen dem Umlenkspiegel und den optischen Achsen der Lichtsysteme maximal 20°. Dadurch ist es möglich, die Leuchte in ein flache Mulde des Fahrzeugs einzusetzen. Diese Mulde kann durch Tiefziehen des Fahrzeugblechs hergestellt sein.

Die optischen Achsen der Lichtsysteme können in einem äquvidistanten Abstand zu der Lichtscheibe verlaufen, wenn die Umlenkflächen zu der optischen Achse der Lichtsysteme in einem spitzen Winkel verlaufen, welcher etwa 45° beträgt. Zwischen den Umlenkflächen sollte der Umlenkspiegel Flächenabschnitte aufweisen, welche annähernd parallel zu der optischen Achse der Lichtsysteme verlaufen. Hierbei sollten die durch die Lichtsysteme gebündelten Lichtstrahlen parallel zueinander verlaufen.

Die Umlenkflächen und die zwischen ihnen verlaufenden Flächenabschnitte sind besonders einfach gestaltet, wenn sie streifenförmig ausgeführt sind und in ihrer Längsausdehnung quer zu den optischen Achsen der Lichtsysteme verlaufen.

Wenn möglich sollten die Umlenkflächen in einem solchen Winkel verlaufen, daß sie das von den Lichtsystemen gebündelte Licht total reflektieren. Ist letzteres nicht möglich, so sollten die an der Innenseite des Umlenkspiegels angebrachten Umlenkflächen mit einer die gebündelten Lichtstrahlen der Lichtsysteme reflektierenden Beschichtung versehen sein.

Die Signalfläche der Lichtscheibe ist weitestgehend homogen ausgeleuchtet, wenn die Umlenkflächen konvex ausgeführt sind und das Licht gestreut zu Lichtscheibe hin reflektieren.

Bei Lichtscheiben, welche lichtdurchlässige Öffnungen und zwischen den Öffnungen lichtundurchlässige Bereiche aufweisten, ist es vorteilhaft, wenn die Umlenkflächen konkav ausgeführt sind und das Licht durch die lichtdurchlässigen Öffnungen der Lichtscheibe hindurchlenken.

Die optischen Lichtsysteme der Leuchte sind einfach aufgebaut, wenn die von den Leuchtdioden gebildeten Lichtquellen auf einer streifenförmigen Trägerplatte angebracht sind und die das Licht bündelnden optischen Elemente der Lichtsysteme an einer einstückig und streifenförmig ausgeführte Zwischenscheibe angebracht sind.

Bei einer Leuchtenkammer, dessen Lichtscheibe eine besonders große Signalfläche aufweisen soll, ist es vorteilhaft, wenn die Leuchte auf sich gegenüberliegenden Seiten der Lichtscheibe nebeneinander angeordnete Lichtsysteme aufweist, deren Umlenkspiegel mit einem Randbereich aneinander grenzen. Dadurch kann die Leuchtenkammer auch eine sehr große Beleuchtungsstärke aufweisen. Die beiden Umlenkspiegel können einer Signalfunktion dienen, ohne daß zwischen ihnen ein dunkler Streifen von der Vorderseite der Leuchte her zu sehen ist, wenn die Umlenkspiegel mit ihrem Randbereich in einem Abstand zur Innenseite der Lichtscheibe verlaufen. Dienen die beiden Umlenkspiegel unterschiedlichen Signalfunktionen, so ist es vorteilhaft, wenn die Umlenkspiegel mit ihrem aneinander grenzenden Randbereich sich zur Innenseite der Lichtscheibe hin erstrecken und in diesem Randbereich einen lichtundurchlässigen Abschnitt aufweisen.

Zwei Ausführungsbeispiele nach der Erfindung sind in der Zeichnung dargestellt und zwar zeigen
- Figur 1: in einer Vorderansicht eine Leucht für Fahrzeuge mit mehreren Leuchtenkammern, welche an einer Seite mehrere nebeneinander angeordnete Lichtsysteme aufweisen;
- Figur 2: einen Schnitt nach der Linie A-A der Figur 1;
- Figur 3: einen Schnitt durch eine Leuchte für Fahrzeuge, welche auf sich gegenüberliegenden Seiten nebeneinander angeordnete Lichtsysteme aufweist;
- Figur 4: eine Teilansicht X der Figur 3 in vergrößertem Maßstab;
- Figur 5: einen Schnitt nach der Linie B-B in Figur 3.

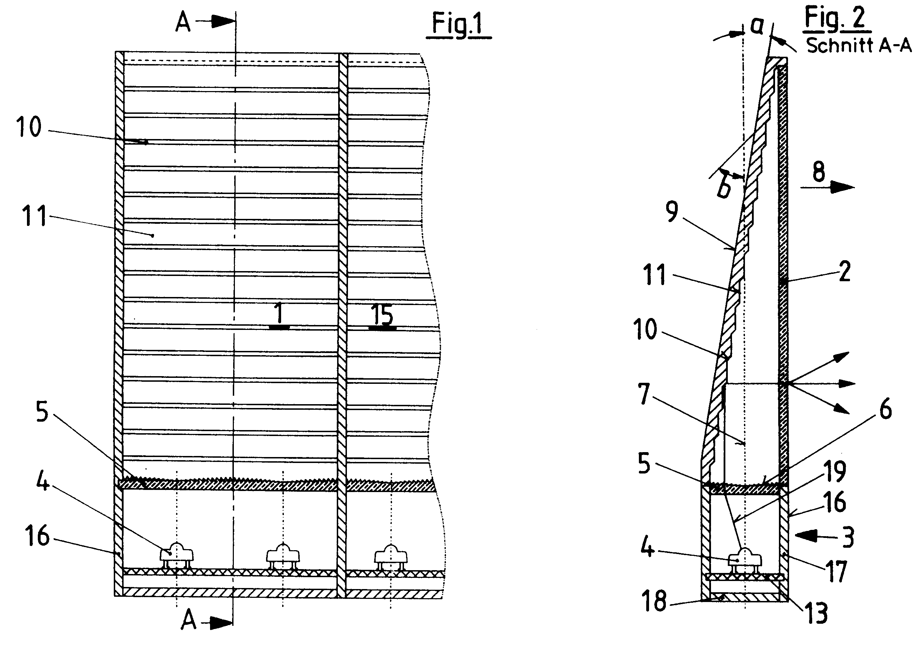

Die in den Figuren 1 und 2 dargestellte Leuchte für Fahrzeuge ist eine Heckleuchte für Fahrzeuge, welche eine geringe Bautiefe aufweist und somit in eine nicht dargestellte äußere flache Fahrzeugmulde einsetzbar ist. Die Fahrzeugmulde kann durch Tiefziehen eines Karosserieblechs hergestellt sein. Die Lichtscheiben der Leuchtenkammern (1,15) sind rechteckförmig gestaltet und verlaufen in ihrer Hauptausdehnung annähernd in einem rechten Winkel zur Lichtaustrittsrichtung (8) der Leuchte. Entgegen der Lichtaustrittsrichtung (8) gesehen ist seitlich neben den Lichtscheiben (2) der Leuchtenkammern (1,15) ein langgestrecktes Gehäuse (16) für nebeneinander angeordnete Lichtsysteme (3) angeordnet. Die vordere Seitenwand (17) des Gehäuses (16) verläuft mit ihrer Außenseite zur Außenseite der Lichtscheiben (2) bündig. Die vordere Seitenwand (17) des Gehäuses (16) kann auch von einem seitlichen Randabschnitt der Lichtscheiben (2) gebildet sein. Letzterer Randabschnitt oder ein dem Randabschnitt vorgeschaltetes Zwischenelement sollte aus lichtundurchlässigem Werkstoff bestehen. Die seitlich nebeneinander angeordneten Lichtsysteme (3) weisen von Leuchtdioden gebildete Lichtquellen (4) und eine den Lichtquelle (4) nachgeschaltete Zwischenscheibe (5) auf. Die Zwischenscheiben (5) der optischen Systeme sind in jeder Leuchtenkammer (1,15) einstückig aus lichtdurchlässigem Material hergestellt und streifenförmig ausgeführt. Die von Leuchtdioden gebildeten Lichtquellen (4) sind in jeder Leuchtenkammer (1,15) an einer streifenförmig ausgeführten Trägerplatte (13) angebracht, welche durch einen eine Öffnung des Gehäuses (16) verschließenden Deckel (18) in dem Gehäuse (16) gehaltert ist. Die von den Lichtquellen (4) ausgehenden Strahlen verlaufend divergierend zueinander und bilden einen Lichtkegel, welcher die Zwischenscheibe (5) zumindest bis nahe an ihren äußeren Rand ausleuchtet. In die als Lichtquellen (4) dienenden Leuchtdioden können das Licht reflektierende Elemente integriert sein. Die Zwischenscheibe (5) ist mit optischen Elementen (6) versehen, welche die Lichtstrahlen (19) der Lichtsysteme (3) bündeln. Die optischen Elemente (6) sind auf der den Lichtquellen (4) abgewandten Seite der Zwischenscheibe (5) angebrachte Fresnellinsen, durch welche die Lichtstrahlen (19) parallel zu den optischen Achsen (7) der Lichtsysteme (3) verlaufen. Die optischen Achsen (7) liegen in einer Fläche, welche in einem äquvidistanten Abstand zu der Hauptfläche der Lichtscheibe (2) verläuft. In den Strahlengang der parallel gerichteten Lichtstrahlen (19) ist ein Umlenkspiegel (9) eingesetzt, welcher plattenförmig ausgeführt ist und in einem spitzen Winkel (a) zu den optischen Achsen (7) bzw. den parallel gerichteten Lichtstrahlen (19) verläuft. Der Umlenkspiegel (9) ist mit einem Rand mit der Lichtscheibe (2) und mit dem anderen Rand mit einer rückwärtigen Seitenwand des Gehäuses (16) der Lichtsysteme (3) verbunden. Der spitze Winkel (a) beträgt etwa 45°. Der Umlenkspiegel (9) weist auf seiner der Lichtscheibe (2) zugewandten Innenseite Umlenkflächen (10) auf, welche in einem spitzen Winkel (b) zu den optischen Achsen (7) bzw. zu den parallel zueinander verlaufenden Lichtstrahlen (19) verlaufen. Der spitze Winkel (b) ist etwa 45° groß. Zwischen den Umlenkflächen (10) verlaufen die Flächenabschnitte (11), welche etwa parallel zu den optischen Achsen (7) der Lichtsysteme (3) verlaufen. Die Umlenkflächen (10) und die Flächenabschnitte (11) sind streifenförmig ausgeführt und verlaufen in ihrer Längsausdehnung in einem äquvidistanten Abstand zu der Fläche, in welcher die optischen Achsen (7) der Lichtsysteme (3) liegen. Die Flächenabschnitte (11) und die Umlenkflächen (10) sind mit einer die Lichtstrahlen (19) reflektierenden Beschichtung versehen. Die von den optischen Elementen (6) der Zwischenscheibe (5) parallel gerichteten Lichtstrahlen (19) treffen auf die Umlenkflächen (10) auf und reflektieren dort in Richtung der Lichtscheibe (2). Die Lichtstrahlen (19) treffen annähernd in einem rechten Winkel auf die Lichtscheibe (2) auf. Die Lichtscheibe (2) weist an ihrer Innenseite nicht dargestellte optische Mittel auf, welche die Lichtstrahlen (19) streuen.

Der Umlenkspiegel (9) kann sowohl plattenförmig als auch gewölbt verlaufen. Bei einer gewölbten Ausführung des Umlenkspiegels (9) muß dieser zumindest in seinem größten Bereich in jedem Punkt in einem spitzen Winkel (a) zu den optischen Achsen (7) der Lichtsysteme (3) verlaufen.

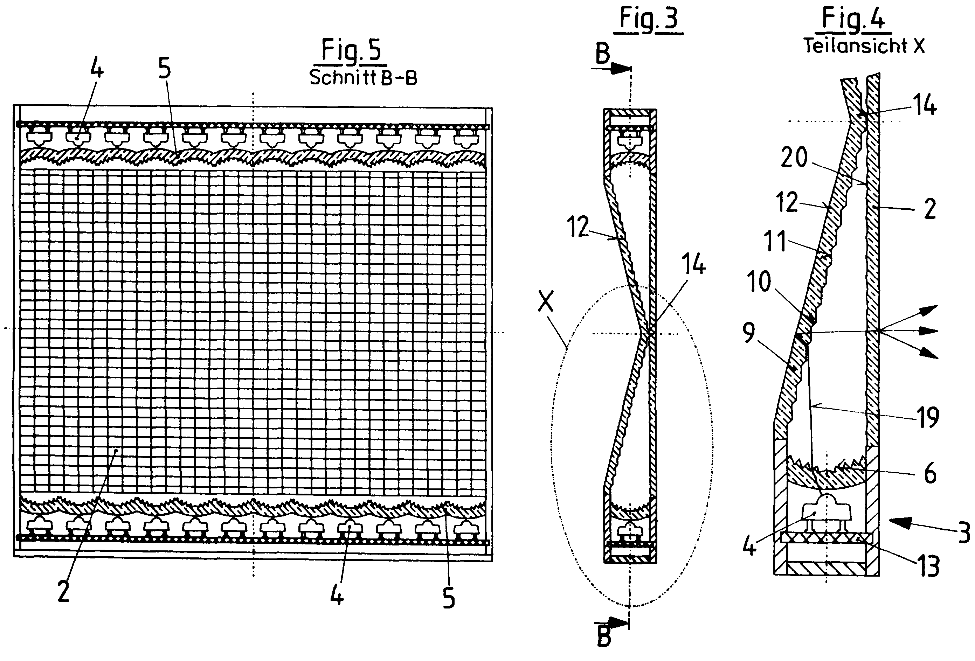

Die Figuren 3, 4 und 5 zeigen eine Heckleuchte für Fahrzeuge, welche eine Bremsleuchte ist. Die Bremsleuchte weist auf gegenüberliegenden Seiten ihrer Lichtscheibe (2) jeweils nebeneinander angeordnete Lichtsysteme (3) auf. Die den Lichtsystemen (3) zugeordneten Umlenkspiegel (9) grenzen mit ihrem Randbereich (14) aneinander und sind einstückig aus lichtdurchlässigem Kunststoff hergestellt. Die Umlenkflächen (10) der Umlenkspiegel (9) sind Grenzflächen, welche die Lichtstrahlen (19) zum Lot hin brechen. Die Außenseite (12) des Umlenkspiegels (9) ist mit einer die Lichtstrahlen (19) reflektierenden Beschichtung versehen. Nach einer Reflextion der Lichtstrahlen (19) an der reflektierenden Beschichtung gehen die Lichtstrahlen (19) durch die Flächenabschnitte (11) an der Innenseite des Umlenkspiegels (9) hindurch und treffen auf die lichtdurchlässige Lichtscheibe (2) auf, an welcher sie durch an die Innenseite der Lichtscheibe (2) angebrachte optischen Mittel (20) streuen. Obwohl die Umlenkspiegel (9) mit ihrem angrenzenden Bereich sehr nahe zur Innenseite der Lichtscheibe (2) verlaufen, erscheint die Lichtscheibe (2) von der Vorderseite der Leuchte her auch im Randbereich (14) homogen ausgeleuchtet, da die Umlenkspiegel (9) aus einem lichtdurchlässigen Werkstoff hergestellt sind.

### Bezugszeichenliste

### Leuchte für Fahrzeuge

- 1: Leuchtenkammer
- 2: Lichtscheibe
- 3: Lichtsystem
- 4: Lichtquelle
- 5: Zwischenscheibe
- 6: optische Elemente
- 7: optische Achse
- 8: Lichtaustrittsrichtung
- 9: Umlenkspiegel
- 10: Umlenkflächen
- 11: Flächenabschnitte
- 12: Außenseite
- 13: Trägerplatte
- 14: Randbereich
- 15: Leuchtenkammer
- 16: Gehäuse
- 17: vordere Seitenwand
- 18: Deckel
- 19: Lichtstrahl
- 20: optische Mittel

## Patentansprüche

1. Leuchte für Fahrzeuge mit mindestens einer Leuchtenkammer (1) für eine Signalfunktion, mit einer die Leuchtenkammer (1) abdeckenden lichtdurchlässigen Lichtscheibe (2), mit mindestens einem optischen Lichtsystem (3), welches eine Lichtquelle (4) und eine der Lichtquelle (4) nachgeschaltete Zwischenscheibe (5) aufweist, die mit das Licht bündelnden optischen Elementen (6) besetzt ist, wobei die lichtdurchlässige Lichtscheibe (2) mit ihrer Hauptausdehnung und das optische Lichtsystem (3) mit seiner optischen Achse (7) quer zur Lichtaustrittsrichtung (8) der Leuchte verlaufen, und mit einem das gebündelte Licht reflektierenden Umlenkspiegel (9), welcher zumindest in seinem größten Bereich in jedem Punkt in einem spitzen Winkel (a) zur optischen Achse (7) des Lichtsystems (3) verläuft und das Licht in Richtung der Lichtscheibe (2) reflektiert, dadurch gekennzeichnet, daß
- in der für eine Signalfunktion dienenden Leuchtenkammer (1) mehrere optische Lichtsysteme (3) nebeneinander angeordnet sind, deren optische Achsen (7) in einer quer zur Lichtaustrittsrichtung (8) der Leuchte umlaufenden Fläche liegen,
- der spitze Winkel (a) zwischen dem Umlenkspiegel (9) und den optischen Achsen (7) der Lichtsysteme (3) kleiner als 45° ist,
- der Umlenkspiegel (9) partiell mit Umlenkflächen (10) versehen ist, auf welche die gebündelten Lichtstrahlen der Lichtsysteme (3) auftreffen.

2. Leuchte nach Anspruch 1, dadurch gekennzeichnet, daß der Winkel (a) zwischen 5° und 40° beträgt.

3. Leuchte nach Anspruch 1, dadurch gekennzeichnet, daß der Winkel (a) maximal 20° beträgt.

4. Leuchte nach einem der Ansprüche 1 bis 3, dadurch gekennzeichnet, daß die Umlenkflächen (10) zu der optischen Achse (7) der Lichtsysteme (3) in einem spitzen Winkel (b) verlaufen, welcher zwischen 30° und 70° groß ist.

5. Leuchte nach Anspruch 4, dadurch gekennzeichnet, daß der spitze Winkel (b) etwa 45° groß ist.

6. Leuchte nach einem der Ansprüche 1 bis 5, dadurch gekennzeichnet, daß Flächenabschnitte (11) zwischen den Umlenkflächen (10) des Umlenkspiegels (9) angeordnet sind und annähernd parallel zur optischen Achse (7) der Lichtsysteme (3) verlaufen.

7. Leuchte nach einem der Ansprüche 1 bis 6, dadurch gekennzeichnet, daß die Umlenkflächen (10) und die zwischen ihnen verlaufenden Flächenabschnitte (11) streifenförmig ausgeführt sind und in ihrer Längsausdehnung quer zu den optischen Achsen (7) der Lichtsysteme (3) verlaufen.

8. Leuchte nach einem der Ansprüche 1 bis 7, dadurch gekennzeichnet, daß die Umlenkflächen (10) mit einer die gebündelten Lichtstrahlen der Lichtsysteme (3) reflektierenden Beschichtung versehen sind.

9. Leuchte nach einem der Ansprüche 1 bis 8, dadurch gekennzeichnet, daß die Umlenkflächen (10) konvex ausgeführt sind und das Licht gestreut zur Lichtscheibe (2) hin reflektieren.

10. Leuchte nach einem der Ansprüche 1 bis 8, dadurch gekennzeichnet, daß die Umlenkflächen (10) konkav ausgeführt sind und das Licht durch lichtdurchlässige Öffnungen im Bereich der Lichtscheibe (2) hindurchlenken.

11. Leuchte nach einem der Ansprüche 1 bis 7, dadurch gekennzeichnet, daß die Umlenkflächen (10) des Umlenkspiegels (9) als Grenzflächen dienen, die die gebündelten Lichtstrahlen der Lichtsysteme (3) zu seiner Außenseite (12) hin brechen, und die Außenseite (12) des Umlenkspiegels (9) eine Reflexionsfläche ist, die das Licht in Richtung der Flächenabschnitte (11) des Umlenkspiegels (9) reflektiert.

12. Leuchte nach Anspruch 11, dadurch gekennzeichnet, daß die Außenseite (12) des Umlenkspiegels (9) mit einer das gebündelte Licht reflektierenden Beschichtung versehen ist.

13. Leuchte nach einem der Ansprüche 1 bis 12, dadurch gekennzeichnet, daß die von Leuchtdioden gebildeten Lichtquellen (4) auf einer streifenförmigen Trägerplatte (13) angebracht sind.

14. Leuchte nach einem der Ansprüche 1 bis 13, dadurch gekennzeichnet, daß die das Licht bündelnden optischen Elemente (6) der Lichtsysteme (3) an eine einstückig und streifenförmig ausgeführte Zwischenscheibe (5) angebracht sind.

15. Leuchte nach einem der Ansprüche 1 bis 14, dadurch gekennzeichnet, daß die Leuchte auf sich gegenüberliegenden Seiten der Lichtscheibe (2) nebeneinander angeordnete Lichtsysteme (3) aufweist, deren Umlenkspiegel (9) mit einem Randbereich (14) aneinander grenzen.

16. Leuchte nach Anspruch 15, dadurch gekennzeichnet, daß die Umlenkspiegel (9) mit ihrem Randbereich (14) in einem Abstand zur Innenseite der Lichtscheibe (2) verlaufen.

17. Leuchte nach Anspruch 15, dadurch gekennzeichnet, daß die Umlenkspiegel (9) mit ihrem aneinander grenzenden Randbereich (14) sich zur Innenseite der Lichtscheibe (2) hin erstrecken und in diesem Randbereich (14) einen lichtundurchlässigen Abschnitt aufweisen.
